# EUROPEAN PATENT APPLICATION

(11) **EP 4 187 455 A1**
(43) Date of publication of application: **31.05.2023**
(21) Application number: 22164296.0
(22) Date of filing: 25.03.2022
(51) Int. Cl.: G06Q 10/00

(54) **DATA QUALITY IMPROVEMENT SYSTEM FOR IMAGING SYSTEM SERVICE WORK ORDERS (SWO)**

(30) Priority: 30.11.2021 US 202163284083 P
(71) Applicant: Koninklijke Philips N.V., 5656 AG Eindhoven (NL)
(72) Inventor: SOSSIN, Artur, Eindhoven (NL); GRAESSLIN, Ingmar, Eindhoven (NL)
(74) Representative: Philips Intellectual Property & Standards

(57) **Abstract**

A non-transitory computer readable medium (**107, 127**) stores instructions executable by at least one electronic processor (**101, 113**) to perform a service work order (SWO) method (**200**). The method includes via a user interface (UI) (**140**), receiving entry of a SWO report (**136**); applying at least one automated analysis to the SWO report to detect information missing from the SWO report and/or to generate a completeness score (**138**) for the SWO report; via the UI, providing an indication (**142**) of the information missing from the SWO report and/or the completeness score for the SWO report; and storing the SWO report in a SWO database (**111**).

## Description

### FIELD OF THE INVENTION

The following relates generally to the imaging arts, imaging device maintenance arts, service work order arts, artificial neural network (ANN) arts, and related arts.

### BACKGROUND OF THE INVENTION

Diagnostic medical imaging systems are complex devices having various components. If one or more of these components fail, the imaging system might deliver sub-optimal results (i.e., deteriorated image quality) or become completely unusable. The former case can lead to misdiagnosis or radiologists' productivity losses (e.g., more difficult result interpretation), while the latter case might result in reduced patient throughput. All scenarios can cause financial losses to the medical institution employing the device. From the patient's side, resulting misdiagnosis poses a potential health risk whilst system down-time may entail an increase in waiting times.

To ensure system down-time is kept to a minimum, timely diagnosis of component fault is key. Among several approaches used to diagnose medical system component failures, the typical one consists of scheduling planned visits of a service engineer, who in turn will perform a set of tests to evaluate the status of the machine. To avoid such resource demanding and cost-ineffective options, automatic approaches are also employed using remote log data storage transmitted from the system (i.e., on a dedicated server). In this case, the system assessment for certain component failures is done remotely to output existing failures (proactive models) or to predict future failures (i.e., predictive models).

The validation of either system diagnostic model type is sometimes done by assessing Service Work Order (SWO) reports, which indicates when a service action related to a particular system component was performed, and the failure mode addressed by the service action. The SWO reports can thus be mined to generate training data for training a diagnostic model. Unfortunately, SWO reports are often incomplete, inaccurate, or not sufficiently detailed to assess whether a part replacement was justified in relationship to a given failure mode. Moreover, the text field content of an SWO report (e.g., language of the description field) may be region dependent. The low quality of the contents of SWO reports makes it problematic to mine these reports for high quality training data to develop and validate models aiming at device failure detection.

Beyond the application of mining SWO reports for training diagnostic models, there are other reasons why an SWO report that is incomplete, inaccurate, or insufficiently detailed can be problematic. Service engineers conducting a current service call may consult a SWO report for a prior service call for information that may be pertinent to the current service call. Deficiencies in the prior SWO report can limit its usefulness for this purpose. Failure to record part replacement in an SWO report can also result in the part being replaced again prematurely.

The following discloses certain improvements to overcome these problems and others.

### SUMMARY OF THE INENTION

In one aspect, a non-transitory computer readable medium stores instructions executable by at least one electronic processor to perform a service work order (SWO) method. The method includes via a user interface (UI), receiving entry of a SWO report; applying at least one automated analysis to the SWO report to detect information missing from the SWO report and/or to generate a completeness score for the SWO report; via the UI, providing an indication of the information missing from the SWO report and/or the completeness score for the SWO report; and storing the SWO report in a SWO database.

In another aspect, a non-transitory computer readable medium stores instructions executable by at least one electronic processor to perform a service work order (SWO) method. The method includes via a UI, receiving entry of a SWO report; applying at least one automated analysis to the SWO report to generate a completeness score for the SWO report; via the UI, providing an indication of the completeness score for the SWO report; and storing the SWO report in a SWO database.

In another aspect, a non-transitory computer readable medium stores instructions executable by at least one electronic processor to perform a service work order (SWO) method. The method includes via a UI, receiving entry of a SWO report; applying at least one automated analysis to the SWO report to detect information missing from the SWO report; via the UI, providing an indication of the information missing from the SWO report; and storing the SWO report in a SWO database.

One advantage resides in providing a user interface (UI) for filling in an SWO report template and visualizing completeness or correctness information for various template fields.

Another advantage resides in enhancing the UI to provide similar SWO report-based recommendations to a field service engineer (FSE).

Another advantage resides in evaluating complex textual fields of an SWO report respective to completeness or other quality metrics.

Another advantage resides in generating recommendations for SWO report fields based on curated data.

Another advantage resides in extracting text patterns from an SWO report and clustering the text patterns around parts and failure modes of a medical device.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The example embodiments are best understood from the following detailed description when read with the accompanying drawing figures. It is emphasized that the various features are not necessarily drawn to scale. In fact, the dimensions may be arbitrarily increased or decreased for clarity of discussion. Wherever applicable and practical, like reference numerals refer to like elements.
Fig. 1 diagrammatically shows an illustrative apparatus for generating an SWO report in accordance with the present disclosure.
Fig. 2 shows example flow charts of operations suitably performed by the apparatus of Fig. 1.

### DETAILED DESCRIPTION OF EMBODIMENTS

Data mining of service work order (SWO) reports to generate training data for training diagnostic models, or to identify ways to improve medical imaging device servicing practices and procedures, is desirable. However, these procedures have been hindered by poor quality of the SWO reports. Ideally, these reports would provide detailed information in which all fields of the SWO report template are filled in. Especially, free-form text fields would ideally be filled in with sufficient detail to capture all salient aspects of the service work. In practice, however, fields of the SWO reports are often left empty or incomplete, and in particular the information entered into the free-form text fields may be cursory or lack important details.

Recognizing these problems, the following proposes a data quality improvement system that operates in real-time as the service engineer (SE) fills out the SWO report. A curated database of high quality SWO reports is collected. This curated database is then used to train an artificial neural network (ANN) model or set of ANN models to assign completeness scores to SWO reports. In some embodiments, ANN models or other diagnostics (e.g., natural language processing or "NLP" analyses) are also developed to score specific free-form text entry fields and/or to identify specific types of incomplete information for the specific free-form text entry fields.

Because the ANN and/or NLP models are operating on text, they are fast and can be applied in (near) real-time. For example, when an SE submits an SWO report these models can be run against the report, and if it scores below some acceptable threshold (e.g. a threshold in a range of 80%-90% in some nonlimiting examples), then the SE can be informed of the deficiency and encouraged (or required) to update the SWO report accordingly. Similarly, if specific incomplete information in a specific free-form text entry field is identified by an ANN or NLP model, then a recommendation to add that information can be provided.

The curation of the curated database of high quality SWO reports can be done manually, or in an automated or semi-automated fashion. In some embodiments, once the system is running any SWO report with a score above some excellence threshold may be added to the curated database, and the ANN model may be retrained occasionally with the expanded database, or based on existing data or model quality monitors. In another variant, the SE can also grade the scoring and/or recommendations provided by the system and this feedback can also be used to update the ANN models. Other types of voting schemes for ranking SWO reports and adding high quality reports to the curated database are also contemplated.

The following also discloses the curated database of high quality SWO reports can also be beneficially leveraged during the subsequent data mining. For example, NLP can be used to decompose free-form text entry field content of the curated SWO reports to extract technology labels for the reports, such as failure modes, and clustering around failure modes or other technology aspects can be used to derive data pools of curated SWO reports related to specific failure modes that can then be analyzed by data mining techniques, such as training and validating diagnostic models under development.

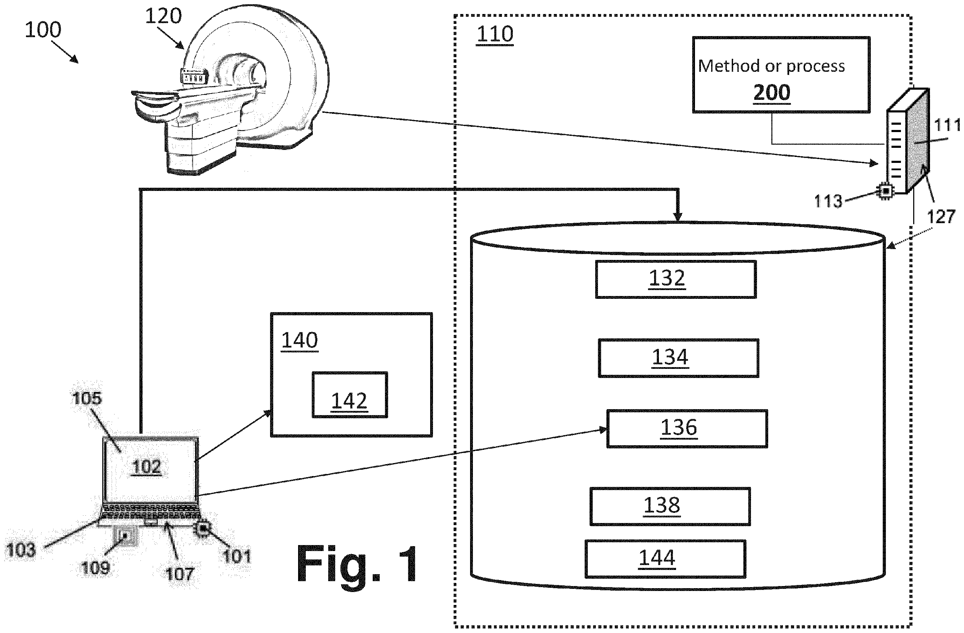

With reference to Fig. 1, an illustrative servicing support system **100** for supporting a service engineer in servicing an electronic device **120** (e.g., a medical imaging device - also referred to as a medical device, an imaging device, imaging scanner, and variants thereof) is diagrammatically shown. By way of some non-limiting illustrative examples, the medical imaging device under service may be a magnetic resonance imaging (MRI) scanner, a computed tomography (CT) scanner, a positron emission tomography (PET) scanner, a gamma camera for performing single photon emission computed tomography (SPECT), an interventional radiology (IR) device, or so forth. (More generally, the disclosed approach can be applied in conjunction with any type of computerized device requiring occasional servicing, especially one that automatically generates log data that are analyzed by predictive models to predict component failures, e.g., the approach could be applied to a commercial airliner, radiation therapy device, or so forth). As shown in Fig. 1, the servicing support system **100** includes, or is accessible by, a service device **102** (i.e., an SE electronic processing device **102)** that may for example be a workstation or electronic processing device used by a remote service engineer (RSE) or field service engineer (FSE) - more generally, a service engineer (SE) may be referred to herein. The service device **102** may for example be a portable device such as a notebook computer or mobile device (e.g. cellphone) that is carried or accessed by an FSE. The service device **102** can alternatively be a desktop computer, workstation or the like used by an RSE. In other embodiments, the service device **102** may be an imaging system controller or computer integral with or operatively connected with the imaging device undergoing service (e.g., at a medical facility). As another example, the service device **102** may be a portable computer (e.g., notebook computer, tablet computer, or so forth) carried by a RSE performing diagnosis of a fault with the imaging device and ordering of parts. In another example, the service device **102** may be the controller computer of the imaging device under service, or a computer based at the hospital. In other embodiments, the service device may be a mobile device such as a cellular telephone (cellphone) or tablet computer.

The service device **102** includes a display device **105** via which servicing-related information such as log data, prior SWO reports, a parts ordering interface, alerts generated by predictive failure models, an SWO entry user interface (UI), and/or so forth are displayed. The service device **102** also preferably allows the service engineer to interact with the servicing support system via at least one user input device **103** such a mouse, keyboard, or touchscreen. The service device further includes an electronic processor **101** and non-transitory storage medium **107** (internal components which are diagrammatically indicated in FIGURE 1). The non-transitory storage medium **107** stores instructions which are readable and executable by the electronic processor **101** for interfacing with the servicing support system **100.** The service device **102** also includes a communication interface **109** to communicate with a backend server or processing device **111,** which typically implements the computational aspects of the servicing support system **100** (e.g., the server **111** has the processing power for implementing computationally complex aspects of the servicing support system **100).** Such communication interfaces **109** include, for example, a wired and/or wireless Ethernet interface (e.g., in the case in which the service device **102** is a RSE workstation); or in the case in which the service device **102** is a portable FSE device the interface **109** may be a wireless Wi-Fi or 4G/5G interface or the like for connection to the Internet and/or an intranet. Some aspects of the servicing support system **100** may also be implemented by cloud processing or other remote processing (that is, the server computer **111** may be embodied as a cloud-based computing resource comprising a plurality of interconnected servers).

In illustrative Fig. 1, the backend server or processing device **111** implements a servicing support system also referred to herein as a backend **110** (e.g., implemented and/or owned by the imaging device vendor or leased by the vendor from a cloud computing service provider). The backend **110** receives log data (e.g., a machine log automatically generated by the medical imaging device **120,** a service log for the medical imaging device **120,** and/or so forth) on a continuous or occasional basis (e.g., in some setups the imaging device **120** uploads machine log entries to the backend **110** on a daily basis). The backend processing for performing predictive fault modeling and (as disclosed herein) maintenance service analyses is performed on the backend server **111** equipped with an electronic processor **113** (diagrammatically indicated internal component). The server **111** is equipped with non-transitory storage medium **127** (internal components which are diagrammatically indicated in FIGURE 1). While a single server computer is shown, it will be appreciated that the backend **110** may more generally be implemented on a single server computer, or a server cluster, or a cloud computing resource comprising ad hoc-interconnected server computers, or so forth. Furthermore, while Fig. 1 shows a single medical imaging device **120,** more generally the database backend **110** may receive log data from many medical imaging devices (e.g., tens, hundreds, or more imaging devices) and performs the disclosed processing for each such medical imaging device.

With continuing reference to FIGURE 1, the non-transitory computer readable medium **127** stores a SWO report database storing a plurality of historical SWO reports **132** related to historical servicing sessions of the medical device **120.** In general, a SE uses the service device **102** in communication with the backend **110** to enter content into a SWO report during or after performing a service call. The service device **102** and/or backend **110** typically provides a structured or semistructured SWO report form or template which the SE fills out to enter the SWO report. The SWO report form or template may include various types of fields, for example freeform text entry fields, selectable radial buttons, drop-down lists, and/or so forth. The SE enters the SWO report and, when it is complete, saves (i.e. files) it. Conventionally there is no feedback as to the quality of the SWO report provided to the SE at the time the SWO report is filed. Embodiments disclosed herein provide such feedback in (near) real time, e.g. at the time the SE proceeds to file the SWO report.

To this end, the electronic processor **113** of the backend server **111** implements at least one artificial neural network (ANN) **134** (which can be trained) to detect information missing from an SWO report **136** (i.e., a "current SWO report **136** for a current servicing session) and/or to generate a completeness score **138** for an SWO report. The training of the ANN **134** includes using historical SWO reports having a completeness score **138** exceeding a predetermined completeness score threshold. Additionally or alternatively, NLP can be used for detecting missing information.

The non-transitory computer readable medium **127** stores instructions executable by the electronic processor **113** of the backend server **111** to provide a user interface (UI) **140** for display on the display device **105** of the service device **102.**

The non-transitory storage medium **127** stores instructions executable by the electronic processor **113** of the backend server **111** to perform a SWO method **200** of generating and storing a SWO report following a servicing session of the medical device **120.**

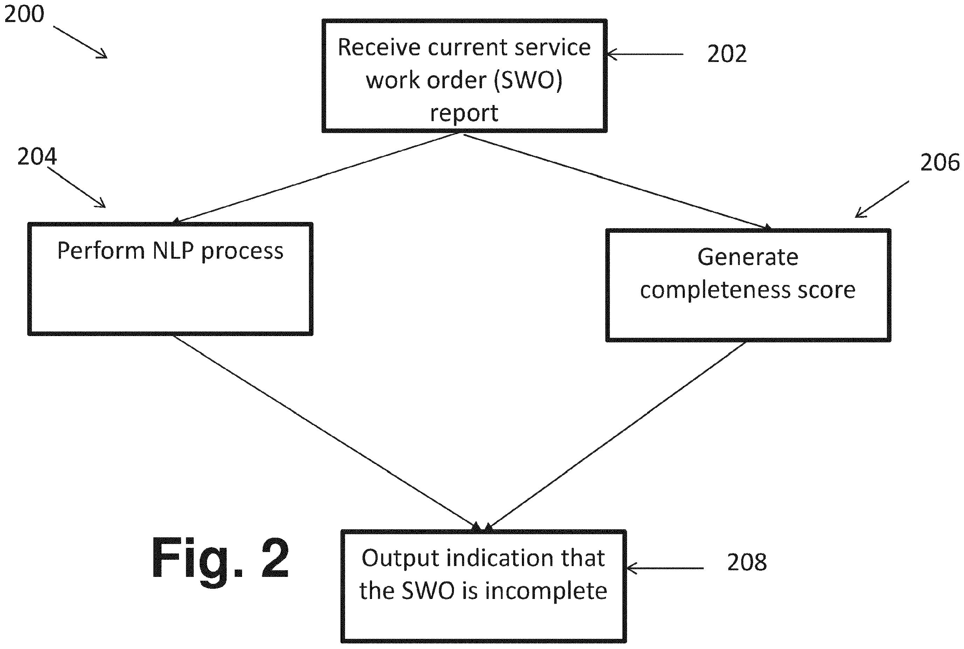

With continuing reference to FIGURE 1 and further reference to Fig. 2, an illustrative embodiment of the method **200** executable by the electronic processor **113** of the backend server **111** is diagrammatically shown as a flowchart. In some examples, the method **200** may be performed at least in part by cloud processing.

To begin the method **200,** at an operation **202,** the SWO report entry UI **140** is provided on the display device **105** of the SE electronic processing device **102,** via which the FSE or RSE enters the current SWO report **136** for the current servicing session of the medical device **120.** The current SWO report **136** is then received and stored at the backend server **111.**

However, before saving or filing the SWO report, at least one automated analysis is applied to the SWO report **136** to detect information missing from the SWO report **136** and/or to generate a completeness score **138** for the SWO report **136.** This can be performed in a variety of manners. In some embodiments, at an operation **204,** the automated analysis includes detecting information missing from the SWO report 136. To do so, at least one natural language process (NLP) operation is applied to the SWO report **136** to detect information missing from the SWO report **136.** In another embodiment, at an operation **206,** the automated analysis includes generating a completeness score **138** for the SWO report **136.**

In some embodiments, the NLP operation **204** and/or the completeness score operation **206** can be performed using the ANN **132.** To do so, one or more historical SWO reports **136** are retrieved from the SWO database **111.** A completeness score **138** according to a predetermined completeness score threshold is then generated for each retrieved historical SWO report **136.** The scored historical SWO reports **136** that meet or exceed the predetermined completeness score threshold are then used to train the ANN **134** to perform the NLP operation **204** and/or the completeness score operation **206.** In some embodiments, textual features can be extracted from the historical SWO reports **132** to provide labels for the historical SWO reports **132.**

The scored historical SWO reports **136** that meet or exceed the predetermined completeness score threshold are also stored in the SWO database **111.** In some embodiments, the scoring of the historical SWO reports **136** can include receiving a user input from the SE via the service device **102,** in which the user input is indicative of the historical SWO report **134** should be stored in the SWO database **111.**

The ANN **134** can be updated (i.e., retrained) with the addition of new historical SWO reports **132** (i.e., SWO reports **132** generated by other SEs during servicing sessions of other medical devices). To do so, additional historical SWO reports **132** are received at the SWO database **111.** These additional historical SWO reports **132** are then scored with completeness scores **138** according to the predetermined completeness score threshold, and the additional historical SWO reports **132** with completeness scores **138** that meet or exceed the predetermined completeness score threshold are used to update the SWO database **111.** The ANN **134** can then be retrained with these additional stored historical SWO reports **132.**

At an operation **208,** an indication **142** is provided, via the UI **140,** of either the information missing from the current SWO report **136** and/or the completeness score **138** for the SWO report **134.** In one example, the completeness score **138** for the current SWO report **136** can be provided on the UI **140.** If the completeness score **138** for the current SWO report **136** does not exceed the predetermined completeness score threshold, then the indication **142** can include an indication for the SE to update the current SWO report **136.** Depending upon the embodiment, this can take the form of a suggestion to update the report, or can be more strongly enforced, for example by not permitting filing or saving the SWO report until it is scored above the predetermined completeness score threshold. In another example, the indication **142** can include the detected missing information from the current SWO report **136.** The indication **142** can further include suggest text to add to the current SWO report **136** allow the current SWO report **136** to exceed the predetermined completeness score threshold. Again, this can optionally be more strongly enforced, for example by not permitting filing or saving the SWO report until the missing information is added. The completed SWO report **136** can then be stored in the SWO database **111.**

In some embodiments, the completed and verified SWO report **136** can be used to train a diagnostic model **144** (implemented in the SWO database **111)** to determine a root cause of the medical imaging device **120** fault, and predict a maintenance operation to be performed on the medical imaging device **120.** To do so, for example, the completed and verified SWO reports **136** stored in the SWO database **111** can be data-mined to determine a root cause of the medical imaging device **120** fault, and predict a maintenance operation to be performed on the medical imaging device **120.** Advantageously, the completed and verified SWO reports **136** are used to improve the reliability of the analysis performed by the diagnostic model **144** in the mining operation.

### EXAMPLES

The following describes the system **100** and the method **200** in more detail. The system **100** comprises two-side quality improvement system for SWO data used in system diagnostic model assessments. The first side considers ensuring better data quality at a source-side (i.e. during SWO creation by an SE) and the client-side (i.e. the time when key insights are extracted for model creation or validation by the backend server **111).**

The source side part of the system **100** (i.e., the service device **102)** aims at supporting the FSE during the process of compiling an SWO report 136 for a given problem. It comprises a standardized template for which the % of each field being complete and correct can be checked and recommendations can be provided based on entries of e.g. predefined options and other previous user entries.

The completeness and correctness for 1-entry fields (e.g. city, customer, serial numbers) is relatively trivial to judge, by checking whether an entry exists and then cross-referencing against proper field values (e.g. list of cities, known customers, correct serial number format using e.g. a regular expression). Additionally, the reference data can be used to support the filling out each of the specified 1-entry fields. The fields can also be pre-populated from the system log file data.

For more complex SWO fields like root cause description, additional info, etc. the quality assessment is done via a neural network model **132.** This model **132** has been trained on curated SWO data from the field, which has been judged as complete and correct. It outputs a % score corresponding to the match with the curated data. A certain percentage (e.g. 80% or 90%) could be deemed as acceptable. Note that one can also consider generating reference data for these fields using system domain knowledge, in other words emulating ideal complex text fields for various components and failure modes.

For further quality improvement of the aforementioned fields, a recommender system can also be deployed to filling out suggestions. This system essentially searches for similar entries in the curated data and makes recommendations on filling out the text fields in question.

On the client side (i.e., at the backend server **111),** one is interested in knowing to which component and failure mode the given SWO report **136** was related to and, most importantly, whether the associated action (check, part replacement, etc.) was justified. The client would search a given system component (e.g., x-ray tube) and get data on possible failure modes and associated text field patterns extracted from relevant historical SWO reports **134.**

For the implementation of such functionality, employs Natural Language Processing (NLP) approaches to decompose SWO text fields (e.g., description) into separate text patterns. These text patterns are generated based on curated data used in the source-side part of the proposed quality improvement system. The curated data also provides information on associated failure modes. As a result, the decomposed text patterns are clustered based on failure mode.

The operation provides the user a pool of data that, on the one hand, has sufficient textual information in general, but also is clustered around failure modes based on various relevant text patterns. The data pool can be used to assess whether a given part replacement was justified by assessing the text patterns. Furthermore, the compiled database is readily usable for system diagnostic model development and verification.

In some embodiments, during filling out of the SWO, there is already a pre-population of information for meta data from the imaging device **120.** A list of devices (e.g., RF coils, gradient systems etc.) is available from, for example, log data or configuration files from the site. In some examples, a unique identifier is needed for this information, such as a unique coil name (i.e., 12NC (order number)), a serial number, and so forth. The list can be a drop-down list from which a coil can be selected. Table 1 shows an example of an SWO report **136.**

**Table 1**

| | |
|---|---|
| Problem Reported by Customer : Problem with Brain coil | Problem Reported by Customer : Brain coil disconnected error appearing during scanning leading to scan aborts |
| How often is issue occurring? : - | How often is issue occurring? : Multiple times a day |
| What recent events have occurred : unknown | What recent events have occurred : the coil has been cleaned with a disinfection liquid and some liquid entered the coil |
| Malfunction area: - | Malfunction area: Coils |
| Troubleshooting Action: What steps are taken during the system diagnosis : | Troubleshooting Action: What steps are taken during the system diagnosis : |
| Customer said coil was broken and no further actions were taken. Will dispatch FSE to site. | Customer confirmed the issue with the ds head coil. FSE also confirmed the same and planned visit at site. Downloaded log file and found NV coil is having some issue. This case released to field to check coil issue further. |
| Malfunctioning device: | Malfunctioning device: |
| • 2 different coils | • 2 different coils : |
| | NV ds base coil: NVC BASE, 12NC: 459800097973, serial number: 1249 |
| | NV ds head coil: NVC HEAD, 12NC 459801290042, serial number: 1249 |
| Troubleshooting Action: | Troubleshooting Action: |
| • We have checked and found CMS to be ok now | • We have checked and found CMS to be ok now |
| • Dstream self-test Passed | • Patsup, SBM, Dstream self-test Passed |
| • SBM & DCI Fiber loopback test passed | • Checked PSU voltages at PSU and DCI, found it in spec |
| • Now we have found issue with 2 different coils | |
| • Unable to detect these coils | • SBM & DCI Fiber loopback test passed |
| | • Now we have found issue with 2 different coils ds head and ds base |
| | • Unable to detect these coils and suspecting them to be defective |
| Conclusions : | Conclusions : |
| # Coil disconnect error was seen in all the sockets. | # NV base and head coil disconnect error was seen in all sockets, so it is most likely a coil error. |
| # Ordered coils and replaced it. | |
| # All coils are working fine, and system is fully | # Checked and found power supply in spec. |
| functional now. | # Ordered DCI and replaced, still the issue is same. |
| | # Cross checked at other site found both coils defective. |
| | # Ordered and replaced the NV ds base and head coil. |
| | # All coils are working fine, and system is fully functional after successfully running all coil self-tests. |

A non-transitory storage medium includes any medium for storing or transmitting information in a form readable by a machine (e.g., a computer). For instance, a machine-readable medium includes read only memory ("ROM"), solid state drive (SSD), flash memory, or other electronic storage medium; a hard disk drive, RAID array, or other magnetic disk storage media; an optical disk or other optical storage media; or so forth.

The methods illustrated throughout the specification, may be implemented as instructions stored on a non-transitory storage medium and read and executed by a computer or other electronic processor.

The disclosure has been described with reference to the preferred embodiments. Modifications and alterations may occur to others upon reading and understanding the preceding detailed description. It is intended that the exemplary embodiment be construed as including all such modifications and alterations insofar as they come within the scope of the appended claims or the equivalents thereof.

## Claims

1. A non-transitory computer readable medium **(107, 127)** storing instructions executable by at least one electronic processor **(101,113)** to perform a service work order (SWO) method **(200),** the method comprising:
via a user interface (UI) **(140),** receiving entry of a SWO report **(136);**
applying at least one automated analysis to the SWO report to detect information missing from the SWO report and/or to generate a completeness score **(138)** for the SWO report;
via the UI, providing an indication **(142)** of the information missing from the SWO report and/or the completeness score for the SWO report; and
storing the SWO report in a SWO database **(111).**

2. The non-transitory computer readable medium **(107, 127)** of claim 1, wherein the SWO method **(200)** further comprises:
receiving input representing the information missing from the SWO report to provide a completed SWO report; and wherein the storing the SWO report in a SWO database **(111)** comprises storing the completed SWO report in the database; and wherein the operations of receiving entry, applying at least one automated analysis, providing an indication, receiving input representing the information missing from the SWO report, and storing the SWO report, are repeated for a plurality of received reports to provide a plurality of completed SWO reports **(134)** in the SWO database **(111);** and wherein the SWO method **(200)** further comprises:
training a diagnostic model **(144)** to determine a root cause of a fault of a medical imaging device **(120)** using the completed SWO reports **(134);** and using the trained diagnostic model to predict a maintenance operation to be performed on the medical imaging device;
or
data-mining one or more of the completed SWO reports **(134)** to determine a root cause of a fault of a medical imaging device **(120).**

3. The non-transitory computer readable medium **(107, 127)** of claim 1, wherein the SWO method **(200)** further comprises:
retrieving historical SWO reports **(134);**
scoring the historical SWO reports according to a predetermined completeness score threshold; and
training at least one artificial neural network (ANN) **(132)** to detect information missing from the SWO report **(136)** and/or to generate a completeness score for an SWO report, the training using historical SWO reports having a completeness score exceeding a predetermined completeness score threshold;
wherein the at least one automated analysis includes the trained at least one ANN

4. The non-transitory computer readable medium **(107, 127)** of claim 3, wherein the method **(200)** further includes:
generating the SWO database **(111)** storing the historical SWO reports **(134)** having a completeness score exceeding predetermined completeness score threshold.

5. The non-transitory computer readable medium **(107, 127)** of claim 3, wherein the method **(200)** further includes:
receiving additional historical SWO reports **(134);**
scoring the additional historical SWO reports according to a predetermined completeness score threshold; and
updating the SWO database **(111)** with the additional historical SWO reports having a completeness score **(138)** exceeding predetermined completeness score threshold.

6. The non-transitory computer readable medium **(107, 127)** of claim 5, wherein the method **(200)** further includes:
retraining the ANN **(132)** with the additional historical SWO reports **(134)** stored in the SWO database **(111).**

7. The non-transitory computer readable medium **(107, 127)** of either one of claims 5 and 6, wherein scoring the historical SWO report **(134)** according to a predetermined completeness score threshold includes:
receiving a user input from a service engineer (SE) indicative of the historical SWO report should be stored in the SWO database **(111).**

8. The non-transitory computer readable medium **(107, 127)** of any one of claims 1-7, wherein the at least one automated analysis includes:
at least one natural language processing (NLP) analysis to detect information missing from the SWO report **(136).**

9. The non-transitory computer readable medium **(107, 127)** of claim 1, wherein the SWO method **(200)** includes:
applying the at least one automated analysis to the SWO report **(136)** to generate a completeness score **(138)** for the SWO report, and the providing includes providing the completeness score for the SWO report.

10. The non-transitory computer readable medium **(107, 127)** of claim 9, wherein, if the completeness score **(138)** for the SWO report **(136)** does not exceed the predetermined completeness score threshold, then the providing of the completeness score for the SWO report includes:
outputting the indication **(142)** to via the UI **(140)** to update the SWO report.

11. The non-transitory computer readable medium **(107, 127)** of claim 1, wherein the SWO method **(200)** includes:
applying the at least one automated analysis to the SWO report **(136)** to detect information missing from the SWO report, and the providing includes providing the detected missing information for the SWO report.

12. The non-transitory computer readable medium **(107, 127)** of claim 11, wherein, if the missing information is detected from the SWO report **(136),** then the providing of the missing information for the SWO report includes:
outputting the indication **(142)** to via the UI **(140)** to suggest text to add to the SWO report allow the SWO report to exceed the predetermined completeness score threshold.

13. The non-transitory computer readable medium **(107, 127)** of any one of claims 1-12, wherein the method **(200)** further includes:
extracting textual features from the historical SWO reports **(134)** to provide labels for the historical SWO reports.
